# EUROPEAN PATENT APPLICATION

(11) **EP 2 096 431 A1**
(43) Date of publication of application: **02.09.2009**
(21) Application number: 08102078.6
(22) Date of filing: 27.02.2008
(51) Int. Cl.: G01N 23/223

(54) **Portable X-ray fluorescence analyzer**

(71) Applicant: Oxford Instruments Analytical Oy, 02630 Espoo (FI)
(72) Inventor: Kantonen, Esko, 00350, Helsinki (FI)
(74) Representative: Brax, Matti Juhani

(57) **Abstract**

A portable X-ray fluorescence analyzer comprises an X-ray source (104, 201), a sample receiving interface, and a detector (105, 207), which has a receiving surface for receiving fluorescent radiation and which is configured to produce a signal indicative of X-ray radiation hitting the detector. A pressure sensor (108) is configured to produce an indication of ambient pressure under which the analyzer is operated. A temperature sensor (109, 211) is configured to produce an indication of the temperature of air between said aperture and said receiving surface.

## Description

### TECHNICAL FIELD

The invention concerns generally the technology of portable X-ray fluorescence analyzers. Especially the invention concerns the problem of reliably analyzing X-ray fluorescence of light elements, the fluorescent radiation from which comes at relatively low energies.

### BACKGROUND OF THE INVENTION

X-ray fluorescence, also known as XRF, forms the basis of an analysis method in which a sample is irradiated with X-rays, which excite the atoms of the constituent elements in the sample. Spontaneous relaxation of exited states in the innermost electron shells causes the emission of so-called fluorescent X-rays at an energy characteristic to each element. An XRF analyzer is a device that contains a controllable X-ray source and a detector placed so that X-rays coming from the source reach the sample, and a part of the fluorescent X-rays emitted into a certain spatial angle may reach the detector.

X-ray fluorescence analysis is commonly used for example in scrap sorting, testing for hazardous substances, and other needs of industry, to quickly identify and quantify the composition of alloys and/or the constituent elements of a sample. Problems may arise with light element constituents such as Mg, Si, Al, and others, because some of the characteristic X-ray fluorescence radiation of these elements comes at energies of only few keV (kiloelectronvolts). For example the K alpha line of Mg at 1.25 keV experiences heavy attenuation in air, so that in an analyzer device with an air gap of 10 millimetres between the sample and the detector more than 90% of the Mg-K radiation is attenuated before reaching the detector.

A prior art publication US 6,909,770 B2 (Schramm et al.) discloses an X-ray fluorescence analyzer equipped with a chamber at the front part of the device, where the X-ray source and detector are located. The front wall of the chamber defines an opening, with a sealing mechanism around its edge. The sealing is pressed against a solid sample surface, which closes the chamber. A separate pump attached to the analyzer device draws all air out of the chamber. As examples of achieved conditions the document mentions a pressure range of 1 to 10-7 torr, or a more narrowly defined range of 1 to 10-2 torr. This reduces significantly the attenuation of X-rays in the free space between the sample and the detector, so said prior art device achieves a remarkable improvement in measuring fluorescent radiation at low energies.

A disadvantage of the prior art device is the additional clumsiness that the external pump arrangement introduces. The pump arrangement also draws a significant amount of electric energy, so that it needs a direct connection to an electric wall outlet. Therefore the apparatus is not well suited for field conditions. Additionally the apparatus is only applicable for analysing samples that offer a large enough portion of a smooth, solid outer surface, because otherwise it is impossible to seal the front end of the chamber tightly against the sample.

A previously filed US patent application number 11/429172, assigned to the same assignee as the present application and incorporated herein by reference, suggests utilising an integrated pressure-lowering apparatus in the analyzer to lower the pressure in the radiation chamber through which the fluorescent radiation comes to the detector. Lowering the pressure essentially lowers the density of the gaseous medium through which the fluorescent radiation must pass, which reduces attenuation and allows a larger portion of the original fluorescent radiation to reach the detector.

### SUMMARY OF THE INVENTION

The present invention aims at producing a portable X-ray fluorescence analyzer that can effectively and accurately measure also light elements like Mg, Si, Al, and others.

The objectives of the invention are achieved by allowing the measurement to take place at ambient pressure, but simultaneously finding out the density of air between the sample and the detector, and using that information to correct the analysis results.

A portable X-ray fluorescence analyzer according to the invention is characterised in that it comprises
- an X-ray source,
- a sample receiving interface, a form or which defines an aperture,
- a detector, which has a receiving surface for receiving fluorescent radiation and which is configured to produce a signal indicative of X-ray radiation hitting the detector,
- a pressure sensor configured to produce an indication of ambient pressure under which the analyzer is operated, and
- a temperature sensor configured to produce an indication of the temperature of air between said aperture and said receiving surface.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

### BRIEF DESCRIPTION OF DRAWINGS

Fig. 1 illustrates a radiation chamber part of an X-ray fluorescence analyzer according to an embodiment of the invention,
fig. 2 illustrates a front end of an exemplary X-ray fluorescence analyzer according to an embodiment of the invention,
fig. 3 illustrates the attenuation of certain radiation in an air gap of 0.9 cm,
fig. 4 illustrates a system-level diagram of an X-ray fluorescence analyzer,
fig. 5 illustrates a processing method for processing measurement results, and
fig. 6 illustrates processing steps for normalizing detected soft X-ray peaks.

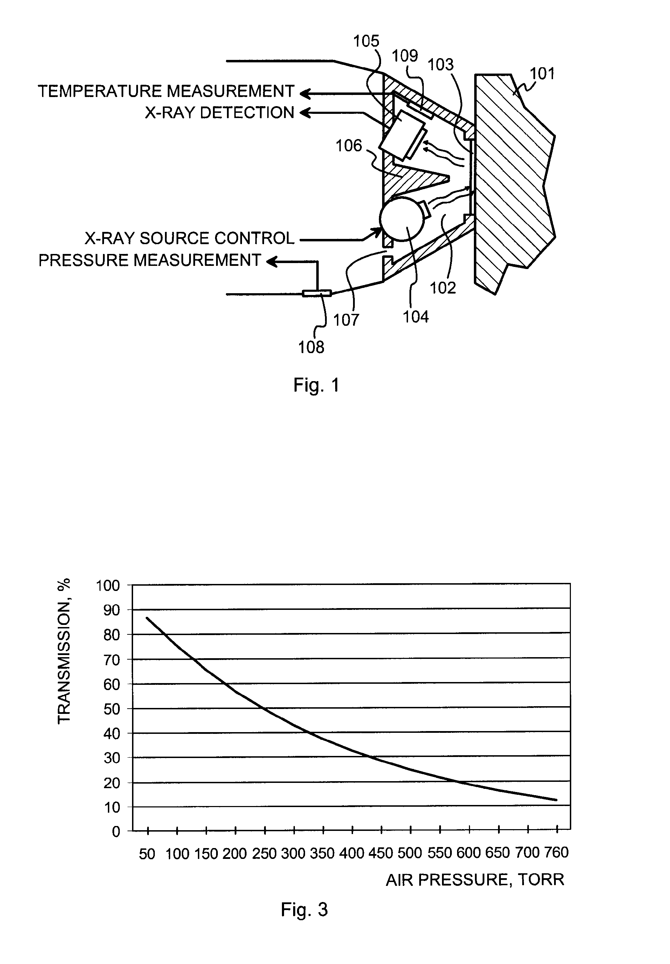

Fig. 1 illustrates schematically a front end of an X-ray fluorescence analyzer. The use of the conventional designation "front" only illustrates the fact that this part of the X-ray fluorescence analyzer will come close to a sample 101, and does not include any directional limitations. The structures of the X-ray fluorescence analyzer define a chamber which is here designated the radiation chamber 102, because X-rays will pass through it on their way both to and from the sample 101. One limiting surface of the radiation chamber 102 is a window 103 that covers an aperture in the sample receiving interface of the analyzer. A window 103 typically consists of a foil made of polypropylene, prolene, kapton or other polymer that has low absorption of X-rays, and its main purpose is to keep moisture and dust from entering the radiation chamber. A typical thickness of the window 103 is in the order ot 2-6 micrometres. If the surrounding conditions are not too harsh, a window foil is not necessarily needed at all, so that there is only the aperture for the radiation to pass through.

Incident radiation from a controllable X-ray source 104 is directed through the window 103 to the sample 101. A part of the fluorescent X-ray radiation generated in the sample comes through the window 103, travels a certain distance in the radiation chamber 102, and hits the receiving surface of a detector 105. Mechanical structures such as the separating wall 106 may be used to ensure that incident radiation from the X-ray source 104 does not directly reach the detector 105. The detector 105 is typically an independent component that comprises the detector material proper (in which the incoming radiation is to create the phenomena that constitute the basis of detecting it) encapsulated inside a protective cover. An entry window (not separately shown), typically comprising a foil of beryllium in the thickness class of about 3 to 13 micrometres, allows the radiation to enter the protective cover and hit the detector material.

We assume that the radiation chamber 102 contains the same gaseous medium at the same pressure as the immediate surroundings of the analyzer device. In the embodiment of fig. 1 this has been ensured by providing a conduit 107 for gaseous substances to freely pass between the radiation chamber 102 and its surroundings. A filter (not shown) may be located in or next to the conduit 107 for keeping impurity particles from reaching the radiation chamber 102.

How much of the fluorescent X-rays will be attenuated in the gaseous medium inside the radiation chamber depends mainly on four factors: the energy spectrum of the fluorescent X-rays, the constitution of the gaseous medium, the density of the gaseous medium, and geometry (the length that the radiation must pass inside the radiation chamber, and the spatial angle in which the sample sees the receiving surface of the detector).

Of said four factors, the geometry is constant and can be made as advantageous as feasible (short distance, large spatial angle) by designing the mechanical structure appropriately. In a vast majority of cases the constitution of the gaseous medium may be assumed to be that of normal air, so it too can be considered as a constant factor. Traces of the original energy spectrum can always be detected with the detector. If the analyzer device contains means for determining the density of the gaseous medium, corrective processing may be applied to the obtained detection results in order to restore the original energy spectrum of the fluorescent X-rays generated in the sample.

In the embodiment of fig. 1, the density of the gaseous medium is measured indirectly by measuring its pressure and temperature. The conduit 107 ensures that the pressure inside the radiation chamber 102 is the same as the ambient pressure under which the analyzer is operated. Therefore it suffices to measure the ambient pressure, which in fig. 1 is implemented with a pressure sensor 108. Space may be scarce in the immediate vicinity of the X-ray source 104 and the detector because of structural optimization, so it may be a relief to the mechanics designer if the pressure sensor does not need to be fitted in there. Naturally the invention does not preclude placing the pressure sensor inside the radiation chamber either. Miniature electronic pressure sensors suitable for an analyzer according to the invention are widely available, for example from companies like Sensortechnics GmbH, Freescale Inc., and others.

On the other hand, the temperature of the gaseous medium between the aperture and the receiving surface of the detector is not necessarily the same as the temperature of other parts of the device, so most advantageously a temperature sensor 109 is located quite close to the path of the fluorescent X-rays. Advantageously the temperature sensor 109 is also thermally isolated from the mechanical structure to which it is attached, and also prevented from receiving radiated heat from possible heat sources in the vicinity, so that it is truly the temperature of the gaseous medium inside the radiation chamber that it is measuring. An extremely wide selection of miniature electronic temperature sensors suitable for this purpose is available on the market.

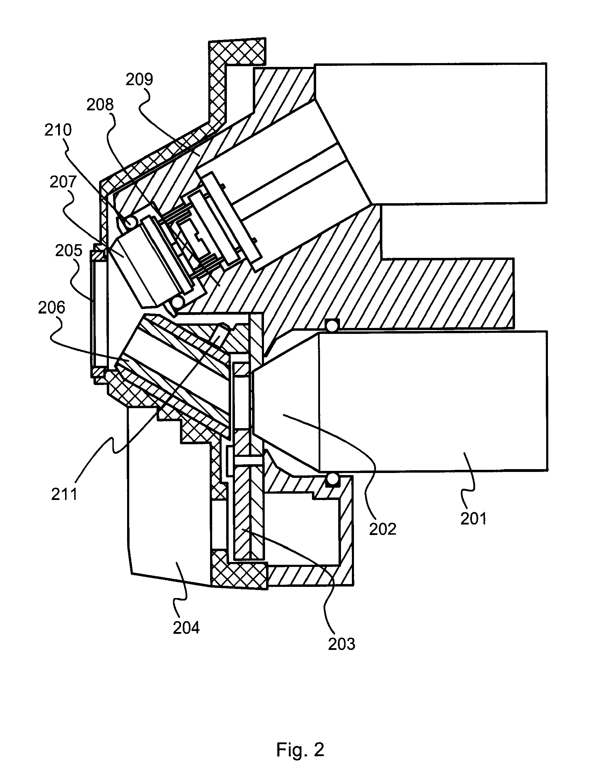

Fig. 2 illustrates in more detail the front end of an X-ray fluorescence analyzer according to an embodiment of the invention. A miniature X-ray tube 201 is used as the X-ray source. The anode (not separately shown) of the X-ray tube 201 is located at narrower end of the tapering portion 202. A shutter mechanism is located near the anode end of the X-ray tube 201. In this embodiment the shutter mechanism comprises a rotatable disc 203, the shape of which defines at least one hole that can be aligned with the anode end of the X-ray tube 201. A sensor and shutter operating mechanism is schematically illustrated as the block 204. The idea of the sensor and shutter operating mechanism 204 is to detect, whether the X-ray fluorescence analyzer is directed towards a target, and only turn (or allow turning) the rotatable disc 203 to a position in which it allows X-rays to pass if that is the case. Thus the user is prevented from accidentally emitting X-rays when the analyzer is not directed towards a target.

A window 205 is provided at the front end of the X-ray fluorescence analyzer for incident radiation to pass towards a target and for fluorescent radiation to pass from the target towards the detector. Between the anode end of the X-ray tube 201 and the window 205 is a collimator tube 206, which directs X-rays generated in the X-ray tube 201 towards the window 205. In this embodiment of the invention the longitudinal axis of the collimator tube 206 is at an oblique angle of about 30 degrees in respect of the longitudinal axis of the X-ray tube 201. This helps in keeping the overall structure compact, because an X-ray tube of end window type (like the one used in the embodiment of fig. 2) has always a certain length in the direction of its longitudinal axis, and a certain diameter in the perpendicular direction. The obliquely directed collimator tube 206 brings the spot where the incident X-rays will hit the sample away from the extension of the longitudinal axis of the X-ray tube, so that placing a detector closer to said spot is easier.

A detector 207 is located as close to the window 205 as possible. The detector is preferably enclosed in a small, cylindrical casing, one flat end of which constitutes the receiving surface for receiving fluorescent radiation. Inside the cylindrical casing is the detector chip, which constitutes most advantageously a silicon drift detector or a silicon PIN diode detector. The detector is in a tilted position in the embodiment of fig. 2, which means that the normal direction of the receiving surface of the detector is at an oblique angle to the plane of the window 205. This again helps in keeping the distances as small as possible, because the output end of the collimator tube 206 and the receiving surface of the detector 207 can be placed very close to each other next to the window 205, yet so that both of them have an essentially unlimited view to the window 205.

The empty space between the window 205, the output end of the collimator tube 206 and the receiving surface of the detector 207 constitutes the radiation chamber. In this embodiment of the invention the free volume of the radiation chamber is kept small by using solid structures like those illustrated as 208 and 209 to support the collimator tube and detector and to fill in space that would otherwise be left empty around them. Sealing structures like the O-ring 210 around the detector may be used to limit the space in which gaseous substances can flow freely in the radiation chamber; however, if the pressure sensor is not located inside the radiation chamber, a conduit or other connection for gaseous substances to flow between the radiation chamber and the location of the pressure sensor should be provided so that the output of the pressure sensor will correctly reflect the pressure of the gaseous medium inside the radiation chamber.

The temperature sensor 211 is located at one limiting surface of the radiation chamber, between the collimator tube 206 and the detector 207, so that other mechanical structures (here the output end of the collimator tube 206 and the attachment mechanisms of the detector 207) block any direct connection between the window 205 and the temperature sensor 211. Keeping the temperature sensor shadowed so that it can not be seen from outside through the window is advantageous, because it keeps thermal radiation that might enter through the window from directly reaching the temperature sensor.

The pressure sensor is not separately shown in fig. 2, but it could be located at any convenient location within the outer covering of the X-ray fluorescence analyzer.

Fig. 3 illustrates how the transmittivity of an 0.9 cm air gap changes for the K alpha energy of Mg as a function of air pressure. Taken that the X-ray fluorescence analyzer according to the present invention should be operable under normal atmospheric pressure (760 torr), it is clear that 0.9 cm is already at the limiting end of how long the air gap between the window and the receiving surface of the detector can be. In an X-ray fluorescence analyzer according to the present invention the air gap should be preferably less than 10 millimetres, and typically between 5 and 8 millimetres. Making the distance smaller than 5 millimetres becomes difficult because the detector begins to cover a major portion of the window and make it difficult to get incident radiation to reach the sample. An experimental analyzer has been manufactured with approximately the front end structure of fig. 2, where the distance along the normal of the receiving surface from the centre point of the receiving surface to the window foil is 5.9 millimetres.

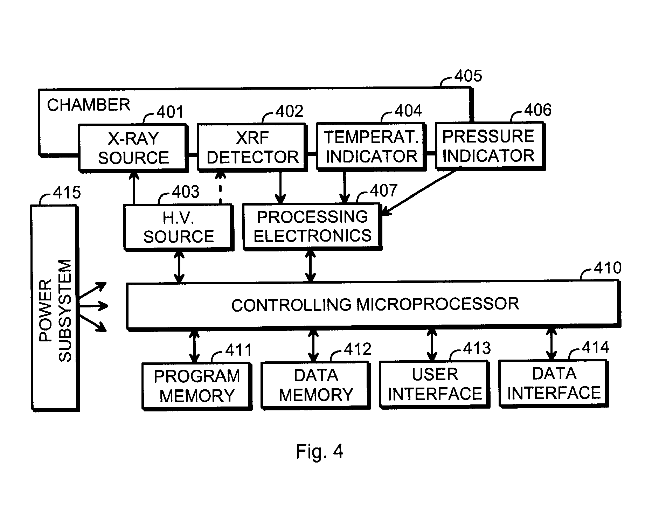

Fig. 4 illustrates a system level approach to an XRF analyzer according to an embodiment of the invention. The X-ray source 401 is selected so that the incident X-rays it produces will be useful in exciting the relatively low-energy states of light elements in a sample. The X-ray detector 402 is selected so that it can reliably detect also the relatively low-energy fluorescent radiation coming from such light elements. A high voltage source 403 is coupled to deliver the necessary high voltages at least to the X-ray source 401 and possibly also to the X-ray detector 402, if high voltages are needed there for biasing.

A temperature indicator subsystem 404 is configured to produce an indication of the temperature of air inside a chamber 405, through which fluorescent X-rays will go on their way from the sample (not shown) to the X-ray detector 402. To complement the temperature measurement and to implement a density indicator subsystem there is also a pressure indicator subsystem 406, the sensor of which can be inside or outside the chamber 405. The output signals of the X-ray detector 402, the temperature indicator subsystem 404 and the pressure indicator subsystem 406 are coupled to a processing electronics block 407, which is configured to implement signal processing functions such as amplification, pulse shaping, filtering and A/D conversion.

A controlling microprocessor 410 is configured to act as the central controlling entity of the XRF analyzer. It controls the operation of the high voltage source 403 and possibly receives feedback therefrom, and it receives the measurement information from the processing electronics block 406 and tunes the signal processing operations if needed. The controlling microprocessor 410 operates by executing a program stored in a program memory 411 and uses a data memory 412 for storing and retrieving data. The controlling microprocessor 410 is also coupled to a user interface 413, which typically comprises keys and/or switches through which a user can give input commands, and a display and/or other sensory indicators, such as lights and buzzers, to give sensory feedback to the user. A data interface 414 is provided and coupled to the controlling microprocessor 410 so that the XRF analyzer may exchange data with other electronic devices. In some embodiments the analyzer comprises an interface for attaching a control unit to the apparatus, and connections from e.g. the pressure and temperature sensors to the interface so that all processing can be made in the control unit.

The functionalities that are described here to take place in a single controlling microprocessor 410 may, in a way well known as such, be distributed among a number of different parts or circuits of the XRF analyzer. A conventional power subsystem 415 is configured to feed operating power to all electrically driven parts of the XRF analyzer.

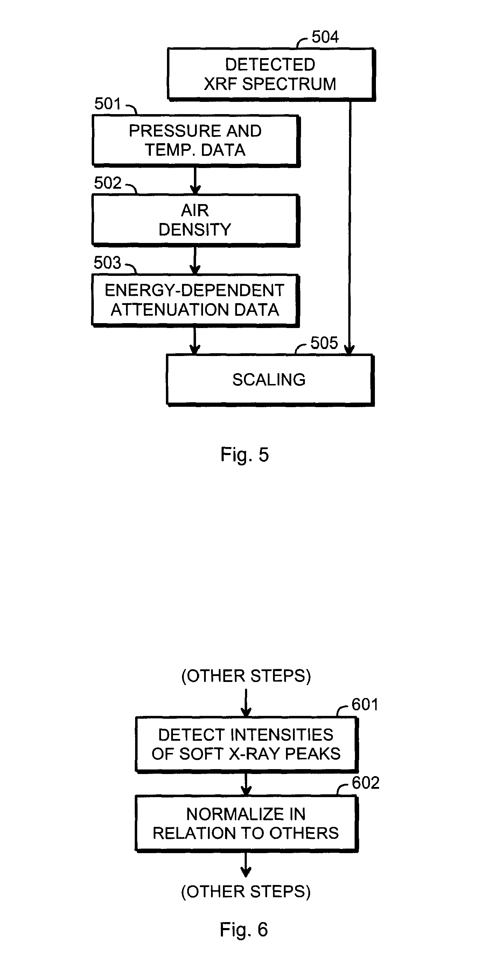

Fig. 5 illustrates how a process of analysing the X-ray fluorescence measurement data, collected in a method that involves measuring air pressure and temperature between the sample and the detector, preferably includes the steps necessary to derive the air density 502 from the output data 501 of the pressure and temperature indicator subsystems, to map the derived air density to a characteristic attenuation 503 at each measured fluorescent energy range, and to scale the measured fluorescent spectrum 504 accordingly at step 505 to remove the energy-dependent effect of attenuation in air. It is relatively straightforward to accomplish the scaling steps by storing into memory a mathematical formula that links a given air density value to the corresponding transmission percentage at each energy, or by storing into memory an appropriate number of previously calculated energy- and density-dependent transmission percentage values in the form of look-up tables.

A principle of normalizing certain measured intensity values can be applied in order to reduce the uncertainty caused by attenuation in air. As air that is causing attenuation we may consider both the air inside the radiation chamber and the air that will remain between the sample and the input window. The last-mentioned is the more difficult to control otherwise, because it may result from effects that are difficult to anticipate, such as the sample surface being uneven or the formation of the bubble-like air-filled space when the window bulges inwards.

The K alpha lines of light elements like Mg, Si and Al are so close to each other that a layer of air with unknown density and/or layer thickness will cause essentially an identical percentage of attenuation to all of them. Thus, if there were initial radiation intensities A, B, and C for the K alpha lines of Mg, Si, and Al respectively, and an unknown layer of air causes an attenuation of p per cent, a detector will detect intensities (100-p)A, (100-p)B, and (100-p)C, respectively. Instead of using for example the detected K alpha intensity (100-p)A for Mg, it is advisable to normalize it by dividing it by an expression that has the unknown transmittivity (100-p) as a common factor. One such expression is the sum of said three detected intensities, so that as an processed intensity value for Mg one would use the ratio A / (A+B+C), from which ratio the common factor (100-p) has been cancelled out.

It is only advisable to take such detected intensities to the denominator that are close enough to each other so that the unknown attenuation percentage p can reasonably be assumed to be the same for them all. Fig. 6 represents schematically steps of a data processing method in which the acquisition of detected intensity values at step 601 is followed by normalization at step 602.

The exemplary embodiments described above should not be construed to limit the applicability of the invention. For example, it is not necessary to use an end window type X-ray tube but also a side window type could be used.

## Claims

1. A portable X-ray fluorescence analyzer, comprising:
- an X-ray source,
- a sample receiving interface, a form or which defines an aperture,
- a detector, which has a receiving surface for receiving fluorescent radiation and which is configured to produce a signal indicative of X-ray radiation hitting the detector,
- a pressure sensor configured to produce an indication of ambient pressure under which the analyzer is operated, and
- a temperature sensor configured to produce an indication of the temperature of air between said aperture and said receiving surface.

2. An apparatus according to claim 1, comprising a control unit coupled to receive said indication of ambient pressure and said indication of the temperature of air and configured to derive an indication of the density of air between said aperture and said receiving surface.

3. An apparatus according to claim 2, wherein said control unit is additionally configured to receive said signal from said detector and to convert said signal into a corrected signal, in which the effect of attenuation in air between said aperture and said receiving surface is taken into account.

4. An apparatus according to claim 1, comprising an interface for attaching a control unit to the apparatus, and further comprising connections from said pressure sensor and said temperature sensor to said interface.

5. An apparatus according to claim 1, comprising an outer covering, wherein said outer covering defines a radiation chamber, one limiting surface of which is said receiving surface, and wherein the pressure sensor is located at a different part within said outer covering than said radiation chamber.

6. An apparatus according to claim 1, wherein the detector is a silicon drift detector.

7. An apparatus according to claim 1, wherein the detector is a silicon PIN diode detector.

8. An apparatus according to claim 1, wherein the distance from the aperture to the receiving surface is less than 10 millimetres.

9. An apparatus according to claim 8, wherein the distance from the aperture to the receiving surface is between 5 and 8 millimetres.
